# FASCICULE DE BREVET EUROPEEN

(11) **EP 3 661 779 B1**
(45) Date de publication et mention de la délivrance du brevet: **17.03.2021**
(21) Numéro de dépôt: 18749007.3
(22) Date de dépôt: 26.06.2018
(51) Int. Cl.: B60K 5/12, B60K 1/00, B60K 5/04

(54) **VÉHICULE AUTOMOBILE COMPORTANT UNE TRANSMISSION PRÉVUE POUR UN CHOC FRONTAL**
KRAFTFAHRZEUG MIT EINEM FÜR EINEN FRONTAUFPRALL ANGEPASSTEN GETRIEBE
MOTOR VEHICLE COMPRISING A TRANSMISSION ADAPTED FOR A FRONTAL IMPACT

(30) Priorité: 03.08.2017 FR 1757471
(43) Date de publication de la demande: 10.06.2020
(73) Titulaire: PSA Automobiles SA, 78300 Poissy (FR)
(72) Inventeur: PATOUT, Bernard, 25750 Arcey (FR); MERESSE, Ludovic, 25750 Arcey (FR)
(86) Numéro de dépôt international: PCT/FR2018/051553
(87) Numéro de publication internationale: WO 2019/025678

(56) Documents cités:
- FR-A1- 2 982 829
- FR-A1- 3 001 660
- JP-A- H09 216 575

## Description

La présente invention concerne un véhicule automobile équipé d'un groupe motopropulseur disposé transversalement à l'avant, prévu pour passer des tests de chocs frontaux.

L'homologation des véhicules automobiles comporte une série de tests de chocs frontaux avec une vitesse définie du véhicule, qui s'accomplissent sur un muret recouvrant toute la largeur du véhicule, et de manière décalée sur un muret recouvrant seulement une partie latérale du véhicule. En particulier les tests comportent un choc frontal décalé avec un muret recouvrant 40% de la largeur du véhicule.

Les véhicules sont conçus pour qu'après le choc, les intrusions des organes du compartiment moteur dans l'habitacle, en déformant le tablier réalisant la séparation de l'habitacle et du compartiment, soient limitées afin d'éviter des blessures causées au pied des passagers avant. En particulier les pédales, notamment la pédale de frein fortement rigide, peuvent être dangereuses.

Pour répondre à ces tests homologation, un type de véhicule connu, présenté notamment par le document EP-B1-1382516, comporte un moteur thermique disposé longitudinalement à l'avant du véhicule, fixé sur une transmission intégrée dans un tunnel formé à l'avant du plancher de l'habitacle.

Le dessus de la transmission forme une pente qui vers l'arrière est inclinée vers le bas. Le dessus du tunnel suit cette pente afin de former un guidage du groupe motopropulseur lors d'un choc sur l'avant du véhicule, qui recule en glissant vers le bas afin d'éviter son intrusion dans l'habitacle.

Un autre type de véhicule connu, présenté notamment par le document EP-B1-1980437, comporte un groupe motopropulseur disposé transversalement à l'avant du véhicule, comprenant des tubes d'échappement partant directement vers l'arrière, en passant dans un tunnel formé à l'avant du plancher de l'habitacle.

Des catalyseurs de gaz d'échappement de forme allongée, sont disposés sur les tubes d'échappement près du moteur, avec une inclinaison suivant la pente du dessus du tunnel afin de guider aussi le groupe motopropulseur vers le bas lors de son recul pour éviter des intrusions dans l'habitacle.

D'une manière générale pour un groupe motopropulseur disposé transversalement à l'avant, la transmission fixée à l'extrémité du moteur thermique constitue un ensemble rigide qui lors du recul de ce groupe vient en contact avec le tablier et le déforme.

Suivant les formes arrière de la transmission, en particulier pour des transmissions modernes comportant un nombre élevé de rapports de vitesse et un moteur électrique d'hybridation, et présentant un volume important, on peut obtenir une déformation trop forte du tablier et un mauvais guidage du groupe motopropulseur vers le bas, qui entraîne des problèmes de protection des pieds du passager se trouvant en face.

Pour obtenir l'homologation de ces véhicules, une solution connue consiste à renforcer le tablier, particulièrement une traverse pouvant se trouver sur ce tablier face à la transmission. Toutefois cette solution pose des problèmes d'augmentation de la masse du véhicule, de modification des procédés de fabrication de la caisse, et d'accroissement des coûts.

La présente invention a notamment pour but d'éviter ces problèmes de l'art antérieur.

Elle propose à cet effet un véhicule automobile comportant un groupe motopropulseur disposé transversalement à l'avant, comprenant une transmission fixée sur un moteur thermique, présentant une face arrière plate disposée en avant d'une traverse du tablier de l'habitacle, qui vient en contact avec cette traverse lors d'un recul du groupe motopropulseur pendant un choc frontal normalisé sur le véhicule, ce véhicule étant remarquable en ce que la face arrière de la transmission est formée par un capot qui est rapporté sur le carter de la transmission, comprenant une face supérieure sensiblement plate comportant une épaisseur réduite par rapport à celle du carter, qui présente en partant vers l'arrière une inclinaison vers le bas.

Un avantage de ce véhicule automobile est que lors d'un choc avant propulsant la face arrière de la transmission sur la traverse du tablier, l'inclinaison vers le bas de la face supérieure du capot formant cette face arrière constitue une pente permettant un glissement vers le bas de la transmission lors de son recul.

De plus le capot qui est rapporté permet d'ajuster son matériau et son épaisseur indépendamment de ceux du carter de la transmission, pour obtenir un effet fusible entraînant sa rupture lors du contact afin de limiter la quantité d'énergie transmise sur la traverse.

On obtient de cette manière sans modification de la caisse du véhicule, et sans modification sensible de la masse de la transmission, une protection simple et efficace des pieds des passagers avant qui facilite l'homologation du véhicule.

Le véhicule selon l'invention peut de plus comporter une ou plusieurs des caractéristiques suivantes, qui peuvent être combinées entre elles.

Avantageusement, le capot est réalisé par un moulage d'un alliage d'aluminium.

Dans ce cas, avantageusement la face supérieure du capot présente une épaisseur inférieure à 4mm. Cette épaisseur donne une résistance limitée par rapport à celle du carter de la transmission, formant un effet fusible qui permet sa rupture en cas de choc sur la traverse.

Avantageusement, le contour du capot est en retrait par rapport à sa face supérieure plate.

Dans ce cas, le contour du capot peut comporter des vis de fixation sur le carter de la transmission, qui ne dépassent pas de la face supérieure plate de ce capot. On s'assure de cette manière que c'est uniquement la face supérieure du capot qui vient en contact avec la traverse du tablier.

En particulier, le capot peut fermer un côté arrière d'un bloc hydraulique de commande de la transmission.

Avantageusement, la face supérieure du capot présente un angle avec un axe vertical compris entre 30 et 50°.

Avantageusement, la face supérieure du capot présente un angle avec un axe transversal compris entre 5 et 10°, qui vers la gauche du véhicule s'incline vers l'arrière.

En particulier, la transmission du véhicule peut être une transmission automatique.

Dans ce cas, la transmission peut comporter une machine électrique de traction prévue pour former un véhicule hybride.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 est une vue d'ensemble d'une transmission automatique pour un véhicule selon l'art antérieur ;
- la figure 2 est une vue de côté de cette transmission, et du tablier de la caisse du véhicule présenté en coupe longitudinale suivant un plan vertical ;
- la figure 3 est une vue d'ensemble d'une transmission automatique similaire pour un véhicule selon l'invention ;
- la figure 4 est une vue de côté de cette transmission, et du tablier présenté en coupe longitudinale suivant un plan vertical ;
- la figure 5 est une vue de dessous de la partie arrière de cette transmission ; et
- la figure 6 est une vue de côté de cette transmission et du tablier, après un choc frontal décalé sur le véhicule.

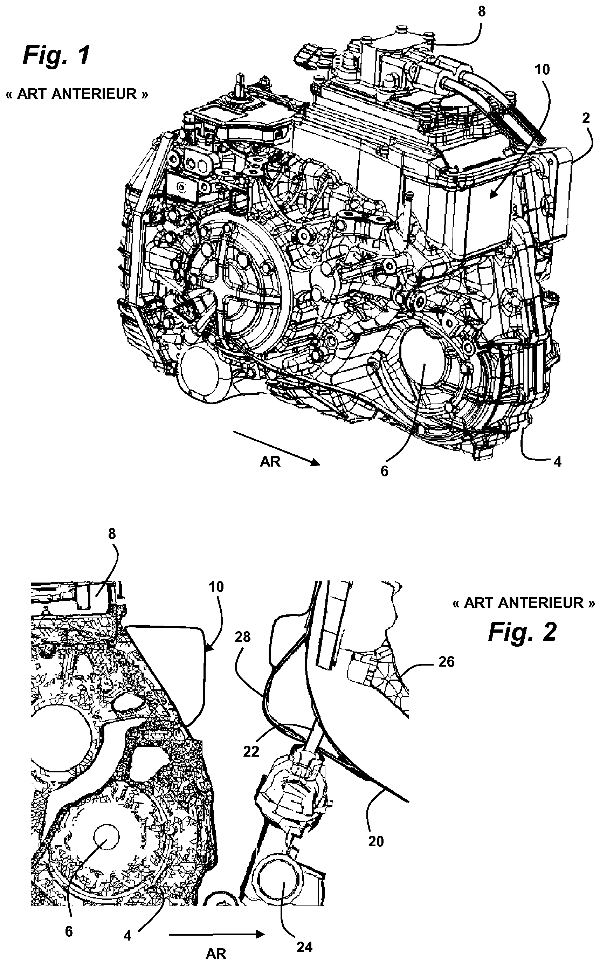

La figure 1 présente une transmission automatique comportant huit vitesses, ainsi qu'une machine électrique intégrée prévue pour réaliser un véhicule hybride, comprenant sur son côté droit une face latérale 2 se fixant sur l'extrémité d'un moteur thermique.

La transmission peut comporter un nombre de rapports important, notamment huit rapports, ainsi qu'une machine électrique de traction pour réaliser un véhicule hybride, ce qui lui donne un grand volume.

Sur le côté arrière, présenté par la flèche AR, la transmission comporte vers le bas un carter de différentiel 4 contenant un différentiel présentant de chaque côté une sortie 6 recevant un arbre de roue d'entraînement des roues avant du véhicule.

Un bloc hydraulique de commande 8 disposé au-dessus de la transmission, est contenu dans une enveloppe formée directement par le moulage du carter de la transmission, comprenant une face arrière plane 10 disposée verticalement dans un plan transversal du véhicule.

La figure 2 présente un tablier du véhicule 20 formé par une tôle séparant l'habitacle du compartiment moteur, comportant un perçage permettant le passage d'un axe de la colonne de direction 22 entraînant le boîtier de direction 24 disposé en dessous.

Un pédalier comprenant une pédale de frein 26 fortement rigide, est disposé juste en arrière du tablier 20.

Le tablier 20 comprenant une partie supérieure sensiblement verticale et une partie inférieure nettement inclinée vers l'arrière, comporte au niveau de la liaison de ces deux parties une traverse 28 comprenant une tôle soudée en avant de ce tablier, formant un bossage tourné vers l'avant.

La face arrière plane 10 du bloc hydraulique de commande 8, fortement rigide car formée par le moulage du carter de la transmission qui est calculé pour résister aux contraintes mécaniques importantes imposées par la transmission du couple, se trouve directement en face de la traverse 28 du tablier 20.

En cas de choc frontal important sur le véhicule, centré sur ce véhicule ou décalé, le groupe motopropulseur recule, et la face arrière plane 10 vient déformer fortement la traverse 28. La rigidité importante de cette face arrière 10 fait qu'elle résiste en se déformant peut. De plus le parallélisme des surfaces de contact n'aide pas au glissement vers le bas de la transmission.

On obtient un recul important du tablier 20 ainsi que des pédales 26 qui peut être dangereux pour le conducteur.

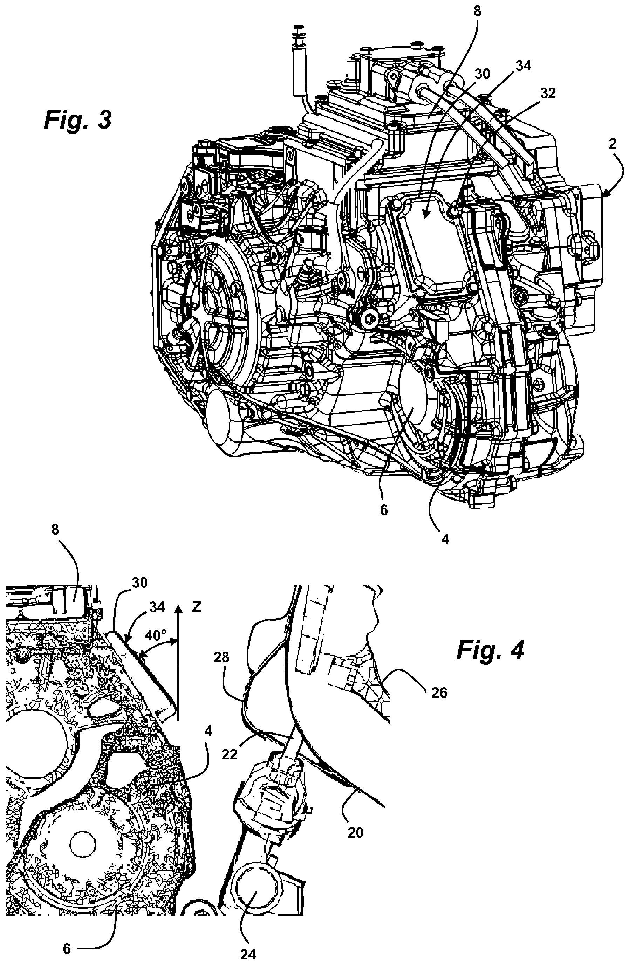

Les figures 3, 4 et 5 présentent une face arrière du bloc hydraulique de commande 8, formée par un capot 30 rapporté sur le carter de la transmission, présentant une forme sensiblement rectangulaire comprenant une face supérieure plate 34. L'entourage du capot 30 en retrait par rapport à sa face supérieure plate 34, reçoit à chaque angle une vis de fixation sur le carter 32 qui ainsi ne dépasse pas de ce dessus plat.

Avantageusement le capot 30 est réalisé par un moulage d'un alliage d'aluminium, présentant une épaisseur inférieure à 4mm, qui est d'environ 3mm alors que le reste du carter de la transmission présente une épaisseur d'environ 8mm pour obtenir sa rigidité.

En variante le capot 30 peut être formé par une tôle d'acier ou d'aluminium, permettant aussi d'ajuster facilement son épaisseur et sa résistance.

En vue de côté, la face supérieure plate du capot 34 présente un angle compris entre 30 et 50° par rapport à l'axe vertical Z, qui est d'environ 40°. En vue de dessus, la face supérieure plate du capot 34 présente un angle compris entre 5 et 10° par rapport à l'axe transversal Y, qui est d'environ 7°, incliné vers l'arrière du côté gauche du véhicule opposé au moteur thermique.

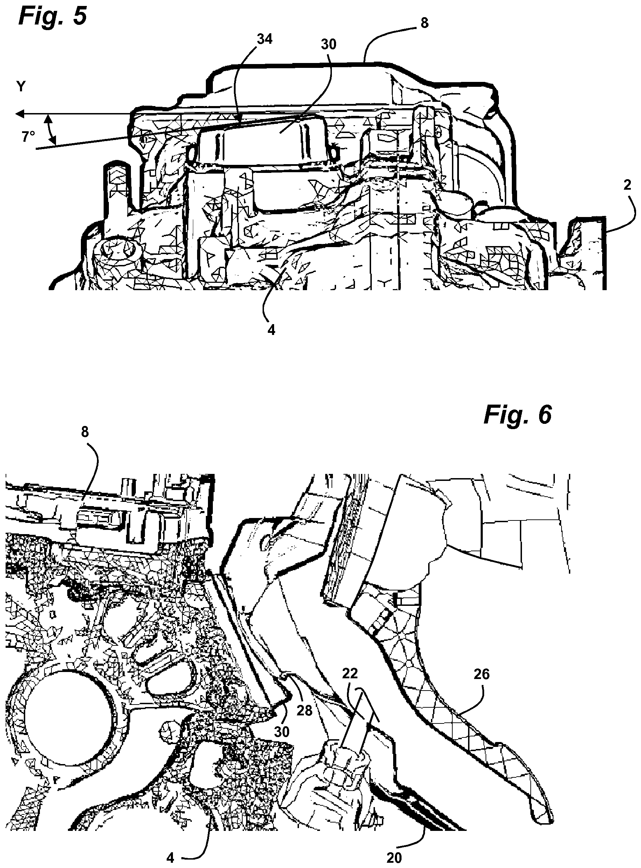

La figure 6 présente la transmission après un choc frontal normalisé à 65km/h, décalé sur le côté droit du véhicule avec un recouvrement à 40%, qui entraîne un recul du groupe motopropulseur, ainsi qu'une inclinaison de ce groupe qui pivote autour de l'axe vertical Z, en reculant de manière plus importante sur le côté droit.

Le choc important du capot 30 sur la traverse 28 entraîne une déformation de ce capot qui constitue un fusible présentant une résistance limitée grâce à son épaisseur réduite, permettant à sa face supérieure plate 34 de se déchirer en absorbant une quantité d'énergie.

De plus l'inclinaison en vue de côté de la face supérieure plate du capot 34 forme une glissière prenant appui sur la traverse 28, afin de favoriser le glissement vers le bas de la transmission, qui a tendance à descendre en suivant la pente de la partie inférieure du tablier 20.

On obtient une limitation importante de l'énergie transmise à la traverse 28, et une faible déformation de cette traverse ainsi que du tablier 20 qui protège les pieds du conducteur.

Par ailleurs en vue de dessus, la petite inclinaison de la face supérieure plate du capot 34 fait qu'avec le recul plus important du côté droit du groupe motopropulseur, cette face ce redresse sensiblement pour se rapprocher dans cette vue de l'axe transversal Y.

La face supérieure plate du capot 34 ainsi redressée, se rapproche du parallélisme avec la face avant transversale de la traverse 28, et donne une meilleure répartition de la pression entre ces éléments qui limite la déformation du tablier 20.

On obtient ainsi sans modification de la caisse du véhicule, en particulier sans ajouter de renfort qui augmenterait sa masse et nécessiterait des modifications de son procédé de fabrication, une protection améliorée des passagers, et une plus grande facilité pour obtenir l'homologation lors des tests de chocs frontaux.

## Revendications

1. Véhicule automobile comportant un groupe motopropulseur disposé transversalement à l'avant, comprenant une transmission fixée sur un moteur thermique, présentant une face arrière plate disposée en avant d'une traverse (28) du tablier (20) de l'habitacle, qui vient en contact avec cette traverse (28) lors d'un recul du groupe motopropulseur pendant un choc frontal normalisé sur le véhicule, **caractérisé en ce que** la face arrière de la transmission est formée par un capot (30) qui est rapporté sur le carter de la transmission, comprenant une face supérieure sensiblement plate (34) comportant une épaisseur réduite par rapport à celle du carter, qui présente en partant vers l'arrière une inclinaison vers le bas.

2. Véhicule automobile selon la revendication 1, **caractérisé en ce que** le capot (30) est réalisé par un moulage d'un alliage d'aluminium.

3. Véhicule automobile selon la revendication 2, **caractérisé en ce que** la face supérieure (34) du capot (30) présente une épaisseur inférieure à 4mm.

4. Véhicule automobile selon l'une quelconque des revendications précédentes, **caractérisé en ce que** le contour du capot (30) est en retrait par rapport à sa face supérieure plate (34).

5. Véhicule automobile selon la revendication 4, **caractérisé en ce que** le contour du capot (30) comporte des vis de fixation (32) sur le carter de la transmission, qui ne dépassent pas de la face supérieure plate (34) de ce capot (30).

6. Véhicule automobile selon l'une quelconque des revendications précédentes, **caractérisé en ce que** le capot (30) ferme un côté arrière d'un bloc hydraulique de commande (8) de la transmission.

7. Véhicule automobile selon l'une quelconque des revendications précédentes, **caractérisé en ce que** la face supérieure (34) du capot (30) présente un angle avec un axe vertical (Z) compris entre 30 et 50°.

8. Véhicule automobile selon l'une quelconque des revendications précédentes, **caractérisé en ce que** la face supérieure (34) du capot (30) présente un angle avec un axe transversal (Y) compris entre 5 et 10°, qui vers la gauche du véhicule s'incline vers l'arrière.

9. Véhicule automobile selon l'une quelconque des revendications précédentes, **caractérisé en ce que** la transmission du véhicule est une transmission automatique.

10. Véhicule automobile selon l'une quelconque des revendications précédentes, **caractérisé en ce que** la transmission comporte une machine électrique de traction prévue pour former un véhicule hybride.

## Patentansprüche

1. Kraftfahrzeug mit einem Antriebsstrang, umfassend quer angeordnet an der Vorderseite, mit einem Getriebe befestigt zu einer Wärmekraftmaschine, vor einem Querelement eine flache hintere Fläche angeordnet ist (28) der Schürze (20) des Fahrgastraumes, die kommt in Kontakt mit diesem Querträger (28) kommen, wenn der Antriebsstrang während eines normalen Frontalaufpralls auf das Fahrzeug zurückfährt, was **dadurch gekennzeichnet ist, dass** die Rückseite des Getriebes durch eine Abdeckung (30) gebildet wird, die am Gehäuse des Getriebes angebracht ist, eine im wesentlichen flachen oberen Fläche (34) mit einer verringerten Dicke im Vergleich zu der des Gehäuses, das eine Neigung nach unten aufweist, die nach hinten beginnt.

2. Kraftfahrzeug nach Anspruch 1, **dadurch gekennzeichnet, dass** die Abdeckung (30) durch Formen einer Aluminiumlegierung hergestellt wird.

3. Kraftfahrzeug nach Anspruch 2, **dadurch gekennzeichnet, dass** die Oberseite (34) der Abdeckung (30) eine Dicke von weniger als 4 mm aufweist.

4. Kraftfahrzeug nach einem der vorhergehenden Ansprüche, **dadurch gekennzeichnet, dass** die Kontur der Abdeckung (30) relativ zu ihrer flachen Oberseite (34) zurückgesetzt ist.

5. Kraftfahrzeug nach Anspruch 4, **dadurch gekennzeichnet, daß** die Kontur der Abdeckung (30) Befestigungsschrauben (32) am Getriebegehäuse, das von der flachen Oberseite (34) dieser Abdeckung nicht vorstehen (30).

6. Kraftfahrzeug nach einem der vorhergehenden Ansprüche, **dadurch gekennzeichnet, dass** die Abdeckung (30) eine Rückseite eines hydraulischen Steuergeräts (8) des Getriebes schließt.

7. Kraftfahrzeug nach einem der vorhergehenden Ansprüche, **dadurch gekennzeichnet, dass** die Oberseite (34) der Abdeckung (30) einen Winkel mit einer vertikalen Achse (Z) zwischen 30 und 50° aufweist.

8. Kraftfahrzeug nach einem der vorhergehenden Ansprüche, **dadurch gekennzeichnet, dass** die Oberseite (34) der Abdeckung (30) einen Winkel mit einer Querachse (Y) zwischen 5 und 10° aufweist, der links von Das Fahrzeug kippt zurück.

9. Kraftfahrzeug nach einem der vorhergehenden Ansprüche, **dadurch gekennzeichnet, dass** das Fahrzeuggetriebe ein Automatikgetriebe ist.

10. Kraftfahrzeug nach einem der vorhergehenden Ansprüche, **dadurch gekennzeichnet, dass** das Getriebe eine elektrische Traktionsmaschine umfasst, die zur Bildung eines Hybridfahrzeugs vorgesehen ist.

## Claims

1. Motor vehicle comprising a powertrain arranged transversely at the front, comprising a transmission fixed to a heat engine , having a flat rear face disposed in front of a cross member (28) of the apron (20) of the passenger compartment, which comes into contact with this crossmember (28) when the power train is backing down during a standard frontal impact on the vehicle, **characterized in that** the rear face of the transmission is formed by a cover (30) which is attached to the housing of the transmission, comprising a substantially flat upper face (34) having a reduced thickness compared to that of the casing, which has a downward inclination starting towards the rear.

2. Motor vehicle according to claim 1, **characterized in that** the cover (30) is produced by molding an aluminum alloy.

3. Motor vehicle according to claim 2, **characterized in that** the upper face (34) of the cover (30) has a thickness of less than 4mm.

4. Motor vehicle according to any one of the preceding claims, **characterized in that** the contour of the cover (30) is set back relative to its flat upper face (34).

5. Motor vehicle according to claim 4, **characterized in that** the outline of the cover (30) comprises fixing screws (32) on the transmission housing, which do not protrude from the flat upper face (34) of this cover (30).

6. Motor vehicle according to any one of the preceding claims, **characterized in that** the cover (30) closes a rear side of a hydraulic control unit (8) of the transmission.

7. Motor vehicle according to any one of the preceding claims, **characterized in that** the upper face (34) of the cover (30) has an angle with a vertical axis (Z) of between 30 and 50°.

8. Motor vehicle according to any one of the preceding claims, **characterized in that** the upper face (34) of the cover (30) has an angle with a transverse axis (Y) of between 5 and 10°, which to the left of the vehicle tilts back.

9. Motor vehicle according to any one of the preceding claims, **characterized in that** the vehicle transmission is an automatic transmission.

10. Motor vehicle according to any one of the preceding claims, **characterized in that** the transmission comprises an electric traction machine provided to form a hybrid vehicle.
